# EUROPÄISCHE PATENTANMELDUNG

(11) **EP 4 082 345 A1**
(43) Veröffentlichungstag der Anmeldung: **02.11.2022**
(21) Anmeldenummer: 21171466.2
(22) Anmeldetag: 30.04.2021
(51) Int. Cl.: A21B 5/02

(54) **MODULARE BACKPLATTENVORRICHTUNG**

(71) Anmelder: Bühler Food Equipment GmbH, 2100 Leobendorf (AT)
(72) Erfinder: Steinböck, Michael, 3042 Holzleiten (AT); Bibaric, Markus, 3400 Kierling (AT); Figoni, Martino, 2100 Leobendorf (AT); Bauer, Herbert, 2100 Leobendorf (AT)
(74) Vertreter: Puchberger & Partner Patentanwälte

(57) **Zusammenfassung**

Backplattensystem, Backplatte, Backvorrichtung und Backplattenvorrichtung, insbesondere Backzange, zur Herstellung unter Überdruck gebackener, knusprig spröder Waffeln aus einer im unausgebackenen Zustand 55-70% Wasser enthaltenden Backmasse, umfassend: zwei Tragrahmen (1), die jeweils einen Tragrahmeninnenraum (2) aufweisen, zwei Backplatten (3), die je an oder in einem der Tragrahmen (1) angebracht sind, und zwei beidseitig der Backplatten (3) angeordnete Verbindungsvorrichtungen (4), wobei die Verbindungsvorrichtungen (4) derart ausgestaltet sind, dass die Backplattenvorrichtung öffenbar, schließbar und in der geschlossenen Stellung zur Bildung einer Überdruckbackform verriegelbar ausgebildet ist, wobei die Backplatten (3) jeweils derart in den Tragrahmeninnenraum (2) eingesetzt sind oder derart im Tragrahmeninnenraum (2) angeordnet sind, dass die der Überdruckbackform abgewandten Rückseiten (5) der Backplatten (3) außenliegende Heizflächen der Backplattenvorrichtung bilden.

## Beschreibung

Die Erfindung betrifft eine Backplattenvorrichtung, ein Backplattensystem, eine Backplatte und eine Backvorrichtung gemäß den unabhängigen Patentansprüchen.

Zur industriellen Herstellung von Waffelprodukten ist es bekannt, einen im Wesentlichen flüssigen Waffelteig, der im unausgebackenen Zustand etwa 55-70% Wasser enthält, in eine geöffnete Backform einzubringen, wobei die Backform als Backzange ausgebildet ist. In weiterer Folge wird die Backzange nach dem Einbringen der Backmasse geschlossen und durch einen beheizten Backraum befördert. Durch das Erhitzen der Backform und damit auch der Backmasse verdampfen deren flüchtige Bestandteile. Dabei entsteht in der Backzange ein erhöhter Druck, dessen Kräfte auf die Backplatten der Backzange wirken.

Es ist bekannt, dass Backzangen Backzangengestelle umfassen, an denen die Backplatten angebracht sind. Diese Backzangengestelle sind öffenbar und schließbar ausgebildet, wobei im Innenbereich zwei Backplatten angebracht sind, die die Backform bilden. Nachteilig an derartigen Konstruktionen ist, dass das außenliegende Gestell die Beheizung der Backzange von außen beeinträchtigt.

Dem Stand der Technik sind auch Backzangen mit selbsttragenden Backplatten ohne Backplattengestelle zu entnehmen. Bei diesen selbsttragenden Backplatten tritt jedoch das Problem auf, dass komplizierte Verstellmechanismen eingesetzt werden müssen, die einer Justierung des Verlaufs der Backplatten dienen und die der Aufweitung der Backform durch die Druckkräfte entgegenwirken. Auch diese Verstellmechanismen beeinträchtigen in der Regel die gleichmäßige Beheizung der Backform und der Backplatten.

Zudem sind Backplatten und die an den Backplatten angebrachten Abschlussleisten einem gewissen Verschleiß unterworfen, sodass diese von Zeit zu Zeit getauscht werden müssen. Auch bei einem Produktwechsel müssen bei derart ausgebildeten Backzangen jeweils die gesamten Backzangen und nicht nur die Backplatten getauscht werden.

Aufgabe der Erfindung ist es nun, eine Backplattenvorrichtung, ein Backplattensystem, eine Backplatte und/oder eine Backvorrichtung zu schaffen, die die Nachteile des Standes der Technik überwinden. Insbesondere soll die Backplattenvorrichtung einen effizienten Betrieb einer Backvorrichtung ermöglichen.

Dies wird beispielsweise dadurch erreicht, dass eine effiziente Beheizung erfolgen kann. Andererseits wird dies z.B. dadurch erreicht, dass ein einfacher Wechsel der Backplatten ermöglicht ist. Zudem soll vorzugsweise auch ein einfaches Justieren der Backplatten erfolgen können.

Die erfindungsgemäße Aufgabe wird insbesondere durch die Merkmale der unabhängigen Patentansprüche gelöst.

Die Erfindung betrifft insbesondere eine Backplattenvorrichtung, bevorzugt eine Backzange, zur Herstellung unter Überdruck gebackener, knusprig spröder Waffeln aus einer im unausgebackenen Zustand 55-70% Wasser enthaltenden Backmasse, umfassend:
- zwei Tragrahmen, die jeweils einen Tragrahmeninnenraum aufweisen,
- zwei Backplatten, die je an oder in einem der Tragrahmen angebracht sind,
- und zwei beidseitig der Backplatten angeordnete Verbindungsvorrichtungen,
- wobei die Verbindungsvorrichtungen derart ausgestaltet sind, dass die Backplattenvorrichtung öffenbar, schließbar und in der geschlossenen Stellung zur Bildung einer Überdruckbackform verriegelbar ausgebildet ist.

Bevorzugt umfasst die Backplattenvorrichtung Laufrollen, sodass die Backplattenvorrichtung beispielsweise als Backzangenwagen ausgebildet ist. Gegebenenfalls umfasst die Backplattenvorrichtung Führungsrollen zur seitlichen Führung der Backplattenvorrichtung entlang deren Bewegungspfad in der Backvorrichtung.

Gegebenenfalls umfasst die Backplattenvorrichtung Steuerglieder, die zur Steuerung einer Bewegung, beispielsweise zum Öffnen und Schließen der Backplattenvorrichtung, mit Steuergliedern der Backvorrichtung, wie insbesondere mit einer Kulisse der Backvorrichtung, in Wirkkontakt stehen.

Bevorzugt ist vorgesehen, dass die Backplatten jeweils derart in den Tragrahmeninnenraum eingesetzt sind oder derart im Tragrahmeninnenraum angeordnet sind, dass die der Überdruckbackform abgewandten Rückseiten der Backplatten außenliegende Heizflächen der Backplattenvorrichtung bilden.

Gegebenenfalls ist vorgesehen, dass sich die Backplatten in den jeweiligen Tragrahmeninnenraum erstrecken.

Gegebenenfalls ist vorgesehen, dass sich die Backplatten durch den jeweiligen Tragrahmeninnenraum hindurch erstrecken.

Gegebenenfalls ist vorgesehen, dass die beiden Verbindungsvorrichtungen durch die beiden Tragrahmen miteinander verbunden sind.

Gegebenenfalls ist vorgesehen, dass die Tragrahmen als Biegeträger zur Aufnahme der beim Backen in der Überdruckbackform ausgehenden Druckkräfte wirken.

Gegebenenfalls ist vorgesehen, dass die Tragrahmen ausschließlich im Randbereich der Backplatten verlaufen und dadurch ein Fenster bilden, durch das die Rückseiten der Backplatten unabgedeckt freigehalten sind.

Gegebenenfalls ist vorgesehen, dass die Backplatten an ihren Stirnseiten jeweils einen nach außen Richtung Rückseite zusammenlaufenden Abschnitt aufweisen.

Gegebenenfalls ist vorgesehen, dass die Backplatten einen pyramidenstumpfförmigen oder abgerundeten Abschnitt aufweisen.

Gegebenenfalls ist vorgesehen, dass die Tragrahmen und insbesondere die Tragrahmeninnenräume der Form der mit ihnen verbundenen Backplatte angepasst sind.

Gegebenenfalls ist vorgesehen, dass die Innenseiten der Tragrahmen bzw. die Tragrahmeninnenräume einen nach außen zusammenlaufenden Abschnitt aufweisen.

Gegebenenfalls ist vorgesehen, dass eine Justieranordnung vorgesehen ist, die eine Einstellung der Lage und/oder des Verlaufs einer Backplatte gegenüber jenem Tragrahmen erlaubt, an dem die Backplatte angebracht ist.

Gegebenenfalls ist vorgesehen, dass die Justieranordnung mehrere im oder am Tragrahmen angeordnete Stellmittel, wie insbesondere Stellschrauben, umfasst.

Gegebenenfalls ist vorgesehen, dass die Justieranordnung mehrere durch den Tragrahmen hindurch verlaufende Stellmittel, wie insbesondere Stellschrauben, umfasst.

Gegebenenfalls ist vorgesehen, dass die Backplatte durch die Justieranordnung mit dem Tragrahmen verbunden ist.

Gegebenenfalls ist vorgesehen, dass die Backplatte ausschließlich durch die Justieranordnung an dem Tragrahmen angebracht ist.

Gegebenenfalls ist vorgesehen, dass die Rückseiten der Backplatten jeweils eine Oberfläche zur gleichmäßigen Beheizung der Backplatte und der Überdruckbackform, wie insbesondere ein Waben-, Pyramiden- oder Rippemuster, oder eine glatte Oberfläche aufweisen.

Gegebenenfalls ist vorgesehen, dass eine Verbindungsvorrichtung als Scharnier ausgebildet ist und die andere Verbindungsvorrichtung als Verriegelungsvorrichtung, sodass die Backplattenvorrichtung als Backzange ausgebildet ist.

Gegebenenfalls ist vorgesehen, dass zur Bildung der Überdruckbackform Abschlussleisten wie Dichtleisten und/oder Dampfleisten vorgesehen sind.

Bevorzugt betrifft die Erfindung ein Backplattensystem umfassend eine erfindungsgemäße Backplattenvorrichtung und mindestens eine weitere Backplatte, die die mit einem der Tragrahmen verbundene Backplatte ersetzt, wobei die weitere Backplatte insbesondere:
- eine defekte oder verschlissene Backplatte gleichartig ersetzt,
- oder eine Backplatte zur Herstellung einer anderen Waffelform ist,
- oder eine Backplatte mit einer anders ausgestalteten Rückseite ist,
- oder eine Backplatte aus einem anderen Material ist.

Bevorzugt betrifft die Erfindung eine Backplatte, die zum Einsatz in einer erfindungsgemäßen Backplattenvorrichtung und/oder in einem erfindungsgemäßen Backplattensystem eingerichtet und/oder geeignet ist.

Bevorzugt betrifft die Erfindung eine Backvorrichtung zur Herstellung unter Überdruck gebackener, knusprig spröder Waffeln aus einer im unausgebackenen Zustand 55-70% Wasser enthaltenden Backmasse, umfassend einen Endlosförderer und mehrere entlang des Endlosförderers vorgesehene erfindungsgemäße Backplattenvorrichtungen, die aneinandergereiht jeweils nacheinander:
- einen Backmassenauftragsbereich zum Auftrag einer Backmasse auf eine geöffnete Backplattenvorrichtu ng,
- einen Schließbereich zum Schließen der Backplattenvorrichtungen,
- einen Backraum zum Backen der Backprodukte in den geschlossenen Backplattenvorrichtungen, in dem mindestens eine Heizanordnung zur Beheizung der im Backraum befindlichen Backplattenvorrichtungen vorgesehen ist,
- einen Öffenbereich zum Öffnen der Backplattenvorrichtungen
- und einen Waffelentnahmebereich zur Entnahme der gebackenen Waffeln aus den geöffneten Backplattenvorrichtungen, durchlaufen.

Gegebenenfalls ist vorgesehen, dass die Heizanordnung direkt auf die Rückseiten der ihr zugewandten Backplatten wirkt.

Gegebenenfalls betrifft die Erfindung eine Backplatte. Die Backplatte ist dazu eingerichtet, mit einer zweiten Backplatte eine Überdruckbackform zu bilden oder zumindest zu begrenzen. Die Backplatte umfasst eine der Überdruckbackform zugewandte Backseite, eine Rückseite und zwischen diesen beiden Seiten angeordnete Stirnseiten. Bevorzugt ist vorgesehen, dass die Rückseite eine kleinere Fläche aufweist als Backseite. Bevorzugt ist vorgesehen, dass im Randbereich der Backplatte, insbesondere stirnseitig, ein zusammenlaufender Abschnitt vorgesehen ist, um eine zwischen der Backseite und der Rückseite vorgesehene Querschnittsverkleinerung der Backplatte zu bilden.

Zusätzlich oder alternativ zum zusammenlaufenden Abschnitt kann die Backplatte im Randbereich eine Schulter bzw. einen entlang der Haupterstreckungsrichtung der Backplatte abstehenden Steg oder Kranz umfassen.

Im Randbereich der Backplatte sind bevorzugt mehrere Elemente vorgesehen, die Teile einer Justieranordnung sind. Die Justieranordnung ist dazu geeignet und/oder eingerichtet, eine Wahl der Lage der Backplatte gegenüber einem Tragrahmen und/oder eine Wahl des Verlaufs der Backplatte gegenüber dem Tragrahmen zu ermöglichen. Insbesondere sind die Elemente der Backplatte, die Teil der Justieranordnung sein können, Gewindebohrungen oder andere Elemente, die eine Justierung der Backplatte über Stellmittel erlauben.

Bevorzugt weist die Backplatte eine rechteckige Form auf. Bevorzugt sind die Elemente der Justieranordnung im Randbereich der Backplatte entlang der beiden längeren Seiten der Rechteckform der Backplatte vorgesehen. Insbesondere sind die Elemente in einer Reihe angeordnet. Beispielsweise sind pro Seite zwei, drei oder mehr derartiger Elemente vorgesehen.

Bevorzugt sind die Elemente in Stegen vorgesehen, die im Randbereich der Backplatte entlang der Haupterstreckungsrichtung der Backplatte abstehen. Bevorzugt schließen diese Stege an den zusammenlaufenden Abschnitt der Backplatte an.

Bevorzugt weist die Backplatte eine rahmenförmige, umlaufende Freistellung auf, die sich von der Rückseite Richtung Backformseite in die Backplatte hinein erstreckt. Insbesondere sind der Steg und/oder der zusammenlaufende Abschnitt durch diese rahmenförmige Freistellung gebildet. Die rahmenförmige Freistellung dient der Aufnahme eines Tragrahmens und/oder der Verbindung mit einem Tragrahmen. Bevorzugt sind die Elemente der Justieranordnung in dieser rahmenförmigen Freistellung vorgesehen.

Bevorzugt sind die Elemente der Justieranordnung in allen Ausführungsformen ausschließlich im Randbereich der Backplatte vorgesehen.

Die Backplattenvorrichtung umfasst zwei Tragrahmen und zwei Backplatten, die an den Tragrahmen angebracht sind. Insbesondere kann ein Backplattensystem gebildet sein, bei dem an einem Tragrahmen wahlweise unterschiedliche Backplatten angebracht werden können. Dadurch kann in effizienter Weise der Tragrahmen für unterschiedliche Produkte aber auch für unterschiedliche Backvorrichtungen eingesetzt werden. Insbesondere kann ein und derselbe Tragrahmen beispielsweise für unterschiedliche Arten der Beheizung verwendet werden. Lediglich die Backplatten müssen an die jeweilige Beheizung angepasst werden. Auch bei einem Produktwechsel, beispielsweise bei der Wahl eines anderen Waffelblattformates, können dieselben Tragrahmen verwendet werden, wobei zur Wahl der unterschiedlichen Formate die Backplatten getauscht werden. Auch bei einem Verschleiß der Backplatten muss nicht die gesamte Backplattenvorrichtung getauscht werden, sondern die Tragrahmen und die an den Tragrahmen angebrachten anderen Komponenten, wie beispielsweise Laufrollen, Führungsrollen und/oder Verbindungsvorrichtungen können weiter verwendet werden. Die verschlissenen Backplatten können separat getauscht werden.

Diese Modularität ermöglicht eine hohe Flexibilität in der Wahl der Einsatzbereiche der Backplattenvorrichtung bzw. des Backplattensystems und dadurch auch eine Verbesserung der Effizienz im Einsatz.

Die Konstruktion erlaubt es, die Materialien der Tragrahmen und der Backplatten unabhängig voneinander zu wählen. Dadurch kann ein Backplattenmaterial gewählt werden, das eine hohe Wärmekapazität aufweist und das eine gleichmäßige Wärmeleitung bzw. Wärmebereitstellung über die gesamte Backform ermöglicht.

Backplatten und Tragrahmen können aus den gleichen Materialien bestehen bzw. aus dem gleichen Material gefertigt sein um einen Unterschied in der thermischen Ausdehnung zu vermeiden. Denkbar ist aber auch, dass die Tragrahmen aus einem anderen Material gefertigt sind als die Backplatten.

Insbesondere kann der Tragrahmen aus Gusseisen, beispielsweise aus Sphäroguss gefertigt sein. Die Tragrahmen sind gegebenenfalls aus Profilen zusammengesetzt oder einstückig gegossen. Die Backplatten sind bevorzugt aus Gusseisen, insbesondere aus Sphäroguss gefertigt.

Die Tragrahmen sind bevorzugt rahmenförmig ausgebildet und weisen dadurch einen Tragrahmeninnenraum auf. Dieser Tragrahmeninnenraum ist insbesondere jener Raum, der zwischen den die Rahmenform ergebenden Elementen liegt. Der Tragrahmen bildet dadurch ein Fenster, in dem zumindest ein Abschnitt der Backplatte angeordnet ist. Insbesondere ist die Backplatte derart in den Tragrahmeninnenraum eingesetzt bzw. in dem Tragrahmeninnenraum angeordnet, dass sie eine Heizfläche, insbesondere die außenliegende Heizfläche der Backplattenvorrichtung bildet. Dabei ist es vorteilhaft, wenn der Tragrahmen ausschließlich im Randbereich der Backplatten verläuft. Das Fenster ist hierbei vorzugsweise von außen unabgedeckt freigehalten. Es wird durch den Tragrahmen bevorzugt ein einziges, durchgehendes Fenster gebildet, das ausschließlich im Randbereich durch den Tragrahmen begrenzt ist. Hierdurch kann der Wärmeeintrag der Heizvorrichtungen der Backvorrichtung ungehindert von außen auf die Rückseite der Backplatte wirken.

Die Backplatte erstreckt sich dabei in den Tragrahmeninnenraum, also bevorzugt zwischen die den Rahmen bildenden Elemente. Insbesondere erstrecken sich die Backplatten einer Backplattenvorrichtung soweit in oder durch den jeweiligen Tragrahmeninnenraum, dass die der Überdruckbackform abgewandten Rückseiten der Backplatten die Heizflächen der Backplattenvorrichtung bilden.

Gegebenenfalls sind die Rückseiten der Backplatten im Tragrahmeninnenraum versenkt. Gegebenenfalls schließen die Rückseiten der Backplatten mit dem Tragrahmen bündig ab. Gegebenenfalls überragen die Rückseiten der Backplatten den jeweiligen Tragrahmen.

Bevorzugt ist vorgesehen, dass die Backplatten ausschließlich im Bereich des Tragrahmens mit dem Tragrahmen verbunden sind. Bevorzugt sind die Backplatten ausschließlich im Randbereich mit dem Tragrahmen verbunden.

Bevorzugt ist eine Justieranordnung vorgesehen, die eine Einstellung der Lage und/oder des Verlaufs einer Backplatte gegenüber jenem Tragrahmen erlaubt, an dem die Backplatte angebracht ist. Die Justieranordnung umfasst bevorzugt mehrere Stellmittel wie beispielsweise Stellschrauben. Diese Stellmittel sind bevorzugt am bzw. im Tragrahmen angeordnet. Beispielsweise verlaufen die Stellmittel in allen Ausführungsformen durch den Tragrahmen hindurch in die jeweilige Backplatte. Dadurch kann verhindert werden, dass die Stellmittel die Wärmeleitung beeinträchtigen und insbesondere, dass die Stellmittel die Rückseiten der Backplatten teilweise abdecken.

Bevorzugt sind mehrere Stellmittel im Verlauf des Tragrahmens angeordnet. Durch individuelle Verstellung der Stellmittel kann dadurch die Lage und gegebenenfalls auch der Verlauf der Backplatten eingestellt werden. Beispielsweise können vier, sechs oder mehr Stellmittel pro Backplatte bzw. pro Tragrahmen vorhanden sein.

Bevorzugt ist in allen Ausführungsformen vorgesehen, dass die Backplatte durch die Justieranordnung mit dem Tragrahmen verbunden ist. Dadurch kann die Verwendung zusätzlicher Verbindungsmittel entfallen, wodurch die Konstruktion vereinfacht wird. Zusätzlich können dadurch weitere, die Wärmeleitung störende, Verbindungsmittel entfallen.

Die Backplatten sind bevorzugt derart ausgestaltet, dass sie die von der Heizvorrichtung der Backvorrichtung eingebrachte Wärme möglichst gleichmäßig auf die Backform übertragen.

Eine verbesserte und insbesondere gleichmäßige Beheizung der Backplatten kann optional auch dadurch erzielt werden, dass die Backplatten an ihren Stirnseiten jeweils einen nach außen Richtung Rückseite zusammenlaufenden Abschnitt aufweisen. Bevorzugt ist vorgesehen, dass die Rückseite der Backplatte eine kleinere Flächenerstreckung, insbesondere eine kleinere Oberflächenabmessung (Länge x Breite) aufweist als die gegenüberliegende, innenliegende Seite der Backplatte. Zusätzlich ist gegebenenfalls vorgesehen, dass die Backplatten den Tragrahmen an der Innenseite zumindest teilweise abdecken.

Grundsätzlich ist es wichtig, dass auch der Randbereich der innenliegenden Seite der Backplatte und/oder der Überdruckbackform ausreichend beheizt wird. Dazu ist es vorteilhaft, wenn sich die Backplatten ausgehend von ihren Rückseiten zumindest abschnittsweise aufweiten. Beispielsweise kann die Backplatte einen pyramidenstumpfförmigen Abschnitt aufweisen. Alternativ kann die Backplatte einen Stufenabschnitt oder einen abgerundeten Abschnitt aufweisen.

Bevorzugt ist der Tragrahmen bzw. der Tragrahmeninnenraum der Form der Backplatte und insbesondere der Form des zusammenlaufenden Abschnitts der Backplatte angepasst.

Der Tragrahmen ist bevorzugt als Biegeträger zur Aufnahme der beim Backen in der Überdruckbackform entstehenden Druckkräfte ausgebildet. Die Backplatten einer Überdruckbackform sind je an einem Tragrahmen angebracht. Die beiden Tragrahmen einer Backplattenvorrichtung sind beidseitig der Backplatten durch Verbindungsvorrichtungen miteinander verbunden bzw. miteinander verbindbar. Beim Backen sind die beiden Tragrahmen durch die Verbindungsvorrichtungen beidseitig fest miteinander verbunden. Der zwischen den Backplatten in der Überdruckbackform entstehende Druck wirkt über die Backplatten auf die beiden Tragrahmen. Dabei werden die Tragrahmen zwischen den beiden Verbindungsvorrichtungen auf Biegung beansprucht und wirken dadurch als Biegeträger.

In weiterer Folge wird die Erfindung anhand von exemplarischen Ausführungen und Figuren weiter beschrieben.
**Fig. 1** zeigt eine schematische Schnittdarstellung maßgeblicher Komponenten einer Backvorrichtung.
**Fig. 2** zeigt eine schematische Schrägansicht einer Backplattenvorrichtung.
   Die **Fig. 3a und 3b** zeigen zwei Schnittdarstellungen einer Backplattenvorrichtung, insbesondere der Backplattenvorrichtung aus Fig. 2.
**Fig. 4** zeigt eine weitere schematische Schnittdarstellung einer Backplattenvorrichtung.
**Fig. 5** zeigt eine schematische Schnittdarstellung einer Backplattenvorrichtung.
**Fig. 6** zeigt eine schematische Schrägansicht einer möglichen Ausführungsform einer Backplattenvorrichtung.
**Fig. 7** zeigt eine Prinzipskizze von Komponenten eines Backplattensystems.

Wenn nicht anders angegeben, so entsprechen die Bezugszeichen der Figuren folgenden Komponenten: Tragrahmen 1, Tragrahmeninnenraum 2, Backplatte 3, Verbindungsvorrichtung 4, Rückseite (der Backplatte) 5, Randbereich (der Backplatte) 6, Fenster 7, zusammenlaufender Abschnitt (der Backplatte) 8, zusammenlaufender Abschnitt (des Tragrahmens) 9, Justieranordnung 10, Stellmittel 11, Scharnier 12, Verriegelungsvorrichtung 13, Abschlussleiste 14, Endlosförderer 15, Backmassenauftragsbereich 16, Schließbereich 17, Backraum 18, Heizanordnung 19, Öffenbereich 20, Waffelentnahmebereich 21.

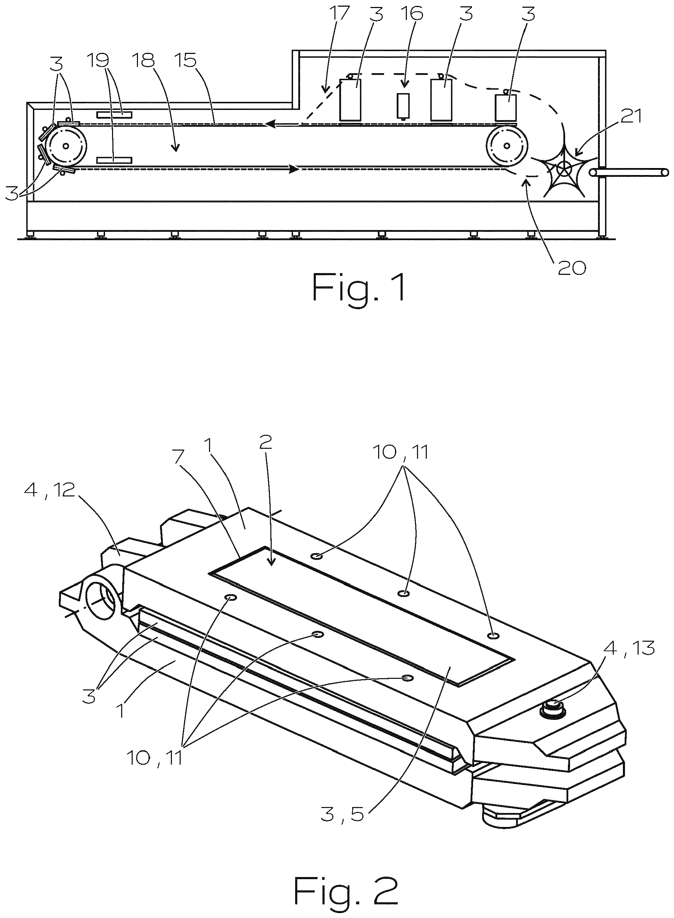

**Fig. 1** zeigt eine schematische Schnittdarstellung einer Backvorrichtung, die insbesondere als Backofen zur industriellen Herstellung von Waffeln ausgebildet ist. Der grundsätzliche Aufbau dieser Backvorrichtungen ist bekannt. Jedoch kann eine derartige Backvorrichtung durch Einsatz der erfindungsgemäßen Backplattenvorrichtungen und/oder des erfindungsgemäßen Backplattensystems verbessert werden.

Die Backvorrichtung umfasst einen Endlosförderer 15, an dem aneinandergereiht mehrere Backplattenvorrichtungen angebracht sind. Dieser Endlosförderer 15 kann beispielsweise eine Kette oder ein anderer geeigneter Endlosförderer 15 sein. In der vereinfachten Darstellung der Fig. 1 sind nicht alle, sondern lediglich einige wenige Backplattenvorrichtungen der Backvorrichtung dargestellt.

Die Backplattenvorrichtungen werden in der Backvorrichtung durch mehrere Bereiche befördert. Insbesondere werden die Backplattenvorrichtungen durch einen Backmassenauftragsbereich 16 befördert, in dem die Waffelbackmasse auf die aufgeklappten Backplattenvorrichtungen aufgetragen wird. Dies geschieht in der Regel durch einen herkömmlichen Teigaufgießer. Die zur Herstellung von Waffeln - im Sinne der Erfindung - geeignete Backmasse enthält etwa 55-70% Wasser und ist daher im unausgebackenen Zustand im Wesentlichen flüssig.

Nach dem Auftragen der Backmasse im Backmassenauftragsbereich 16 werden die Backplattenvorrichtungen in einem Schließbereich 17 geschlossen und anschließend in dieser geschlossenen Stellung verriegelt.

In weiterer Folge werden die Backplattenvorrichtungen durch einen Backraum 18 befördert. In diesem Backraum 18 ist eine Heizanordnung 19 vorgesehen. Diese Heizanordnung 19 ist dazu eingerichtet, den Backraum 18, aber vorrangig die Backplattenvorrichtungen, zu beheizen.

Beim Durchlaufen des Backraums 18 werden die Backplattenvorrichtungen bevorzugt von einer oberen Transportebene auf eine untere Transportebene umgelenkt. Beim Durchlaufen des beheizten Backraums 18 werden die Backplattenvorrichtungen erhitzt. Dabei verdampfen die flüchtigen Bestandteile der in den Backplattenvorrichtungen vorgesehenen Backmasse, insbesondere der Wasseranteil der Backmasse. Durch Expansion des Wasserdampfes baut sich in der zwischen den Backplatten 3 gebildeten Überdruckbackform ein Überdruck auf, dessen Druckkräfte auf die Backplattenvorrichtung wirken.
In weiterer Folge werden die Backplattenvorrichtungen in einem Öffenbereich 20 geöffnet und in einem Waffelentnahmebereich 21 können die fertig gebackenen Waffeln entnommen werden. Anschließend beginnt dieser Herstellungszyklus von neuem.

**Fig. 2** zeigt eine schematische Schrägansicht von Komponenten einer Backplattenvorrichtung. Die Backplattenvorrichtung umfasst zwei Tragrahmen 1. Die zwei Tragrahmen 1 weisen jeweils einen Tragrahmeninnenraum 2 auf. Dieser Tragrahmeninnenraum 2 ist ein Raum, der zwischen jenen Elementen des Tragrahmens 1 liegt, die die Rahmenform bilden. Zudem umfasst die Backplattenvorrichtung zwei Backplatten 3. Die beiden Backplatten 3 sind jeweils an einem der Tragrahmen 1 angebracht.

Die Backplatte 3 ist insbesondere derart an dem Tragrahmen 1 angebracht, dass die Backplatte 3 zumindest mit einem Abschnitt in den oder durch den Tragrahmeninnenraum 2 ragt.

Die Tragrahmen 1 weisen jeweils ein Fenster 7 auf. Dieses Fenster 7 öffnet den Tragrahmeninnenraum 2 nach außen, insbesondere Richtung Heizanordnung 19. Die Backplatte 3, insbesondere deren Rückseite 5, ist durch dieses Fenster 7 unabgedeckt freigehalten, sodass die Heizanordnung der Backmaschine die Wärmeenergie an diese Rückseite 5 bzw. an die Backplatte 3 ungestört übertragen kann. Wie in Fig. 2 dargestellt, ragt die Backplatte 3 in den Tragrahmeninnenraum 2, sodass die Backplatte 3, insbesondere deren Rückseite 5, etwa bündig mit dem Tragrahmen 1 abschließt. Gegebenenfalls überragt die Backplatte 3 den Tragrahmen 1 um ein gewisses Maß oder die Backplatte 3 ist im Tragrahmen 1 um ein gewisses Maß versenkt.

Die Backplatten 3 sind jeweils über Stellmittel 11 mit dem Tragrahmen 1 verbunden. Die Stellmittel 11 sind Teile einer Justieranordnung 10. Diese Justierordnung 10 ermöglicht es, die Backplatte 3 gegenüber dem Tragrahmen 1 zu positionieren. Einerseits kann dadurch die genaue Lage der Backplatte 3 gegenüber dem Tragrahmen 1 gewählt werden. Zusätzlich kann aber bevorzugt auch der Verlauf der Backplatte 3 gewählt werden. So können in Fig. 2 beispielsweise die mittleren beiden Stellmittel 11 verstellt werden, um eine Wölbung der Backplatte 3 zu bewirken.
Die beiden Tragrahmen 1 sind über Verbindungsvorrichtungen 4 miteinander verbunden bzw. verbindbar. In der vorliegenden Ausführungsform ist eine Verbindungsvorrichtung 4 als Scharnier 12 ausgebildet. Die andere Verbindungsvorrichtung 4 ist als Verriegelungsvorrichtung 13 ausgebildet. Dadurch kann die Backplattenvorrichtung auf- und zugeklappt werden. In ihrer geschlossenen Stellung kann die Backplattenvorrichtung durch die Verriegelungsvorrichtung 13 verriegelt und damit fest verschlossen werden - dies insbesondere, um den beim Backen in der Überdruckbackform zwischen den Backplatten 3 entstehenden Druckkräften entgegenzuwirken.

In der vorliegenden Ausführungsform weisen die Tragrahmen 1 und die Fenster 7 eine rechteckige Form auf. Die Stellmittel 11 der Justieranordnung 10 erstrecken sich durch den jeweiligen Tragrahmen 1 hindurch. Dadurch sind keine zusätzlichen Laschen oder Verbindungsmittel vorgesehen, die den Wärmeeintrag auf die Rückseite 5 der Backplatte 3 beeinträchtigen.

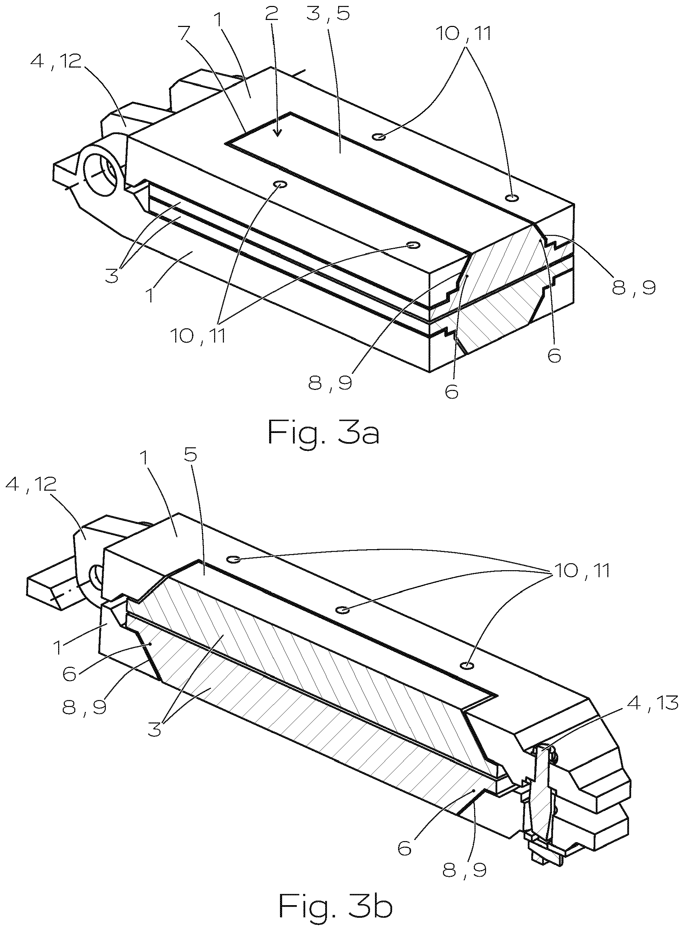

Die **Fig. 3a und 3b** zeigen zwei unterschiedliche Schnitte einer schematischen Ansicht von Komponenten einer Backplattenvorrichtung, insbesondere der Backplattenvorrichtung aus Fig. 2. Die mit Bezugszeichen versehenen Komponenten entsprechen im Wesentlichen den Komponenten aus Fig. 2. Die Backplatten 3 sind jeweils nur in ihrem Randbereich 6 nach außen hin von dem jeweiligen Tragrahmen 1 abgedeckt. Insbesondere sind die Backplatten 3 nur in ihrem Randbereich 6 mit dem Tragrahmen 1 verbunden.

Die Backplatten 3 umfassen jeweils einen nach außen hin zusammenlaufenden Abschnitt 8. Insbesondere dadurch kann die auf die Rückseite 5 einer Backplatte 3 eingebrachte Wärmeenergie gleichmäßig auf die gegenüberliegende Seite der Backplatte 3 geleitet werden, sodass auch die Überdruckbackform, die zwischen den beiden Backplatten 3 gebildet ist, gleichmäßig beheizt wird.

Zudem kann gegebenenfalls in allen Ausführungsformen durch diesen zusammenlaufenden Abschnitt 8 eine Zentrierung der Backplatten 3 am Tragrahmen 1 erfolgen.

Bevorzugt weisen auch die Tragrahmen 1 jeweils einen zusammenlaufenden Abschnitt 9 auf. Diese sind insbesondere an die zusammenlaufenden Abschnitte 8 der Backplatten 3 angepasst. Die zusammenlaufenden Abschnitte 8 der Backplatten 3 sind jeweils an den Stirnseiten der Backplatten 3 angeordnet.

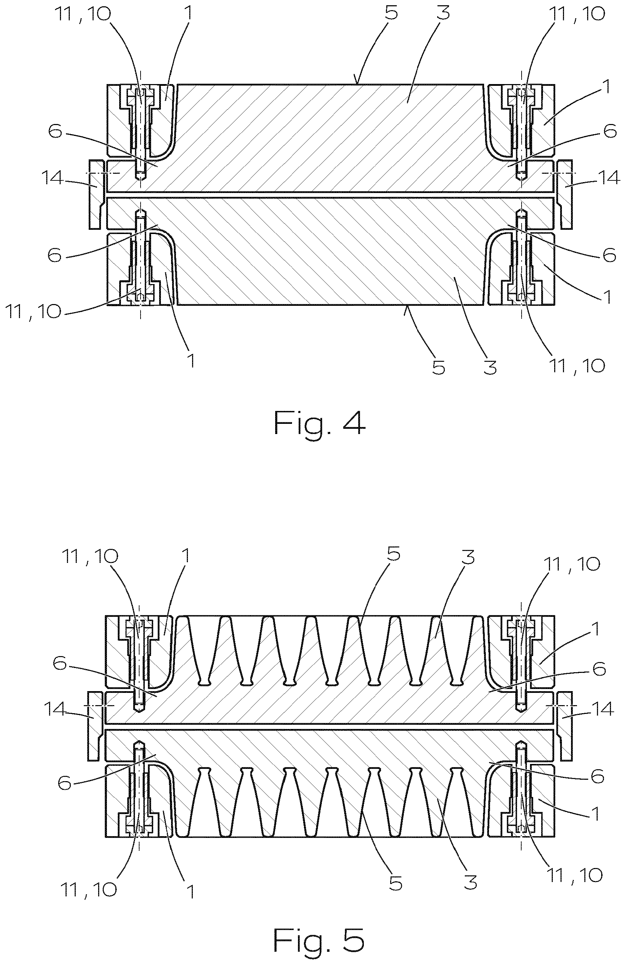

**Fig. 4 und Fig. 5** zeigen schematische Schnittdarstellungen, wobei die Schnittlinie beispielsweise der der Fig. 3a entspricht. In den Fig. 4 und 5 sind Abschlussleisten 14 vorgesehen, wie es bei gattungsgemäßen Backplattenvorrichtungen üblich ist. Diese Abschlussleisten 14 sind bevorzugt als Dichtleisten und/oder als Dampfleisten ausgebildet und dichten die Überdruckbackform während des Backvorgangs soweit ab, dass das gewünschte Backergebnis erzielt wird. Diese Abschlussleisten 14 sind bevorzugt an einer der Backplatten 3 angebracht. Derartige Abschlussleisten 14 sind bevorzugt bei allen Ausführungsformen vorgesehen.

Zusätzlich ist in den Fig. 4 und 5 auch dargestellt, wie die Justieranordnung 10 und insbesondere deren Stellmittel 11 aufgebaut sein können. So umfasst die Justieranordnung 10 mehrere verstellbare Hülsen und mehrere in diesen Hülsen vorgesehene Gewindeschrauben. Durch diese Elemente kann die Backplatte 3 mit wählbarem Verlauf und fest mit dem Tragrahmen 1 verbunden werden.

Die Backplattenvorrichtungen der Fig. 4 und 5 unterscheiden sich insbesondere durch die Ausgestaltung der Rückseiten 5 der Backplatten 3 voneinander. So weisen die Backplatten 3 der Fig. 4 eine im Wesentlichen glatte Rückseite 5 auf. Derartige Backplatten 3 haben beispielsweise ein verhältnismäßig großes Volumen und folglich eine hohe Wärmespeicherfähigkeit. Diese Backplatten 3 resultieren insbesondere in einem trägeren Regelverhalten und/oder können einen gleichmäßigen Energieeintrag auf die Überdruckbackform bzw. auf die in der Überdruckbackform befindliche Backmasse bewirken.

**Fig. 5** zeigt hingegen Backplatten 3, die an ihrer Rückseite 5 ein rippenförmiges Muster aufweisen. Dadurch ist die Oberfläche der Rückseite 5 der Backplatte 3 vergrößert. Derartige Backplatten 3 haben beispielsweise ein verhältnismäßig kleines Volumen und folglich eine kleinere Wärmespeicherfähigkeit als massive Backplatten 3. Backplatten 3, die an ihrer Rückseite 5 ein rippenförmiges Muster aufweisen, können durch ihre kleinere Wärmespeicherfähigkeit schneller aufgeheizt werden. Zudem weisen derartige Backplatten 3 eine größere Wärmeaustauschfläche an ihren Rückseiten 5 auf.

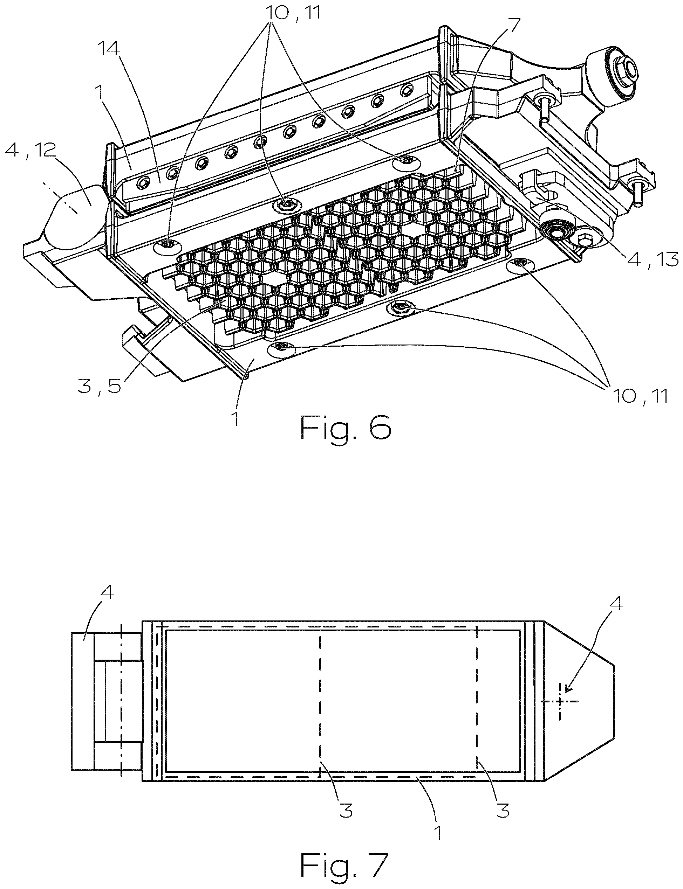

**Fig. 6** zeigt eine Schrägansicht einer weiteren Ausführungsform einer Backplattenvorrichtung. Die mit Bezugszeichen versehenen Elemente entsprechen im Wesentlichen den zuvor benannten Elementen. Bei dieser Ausführungsform ist die Rückseite 5 der Backplatte 3, insbesondere beider Backplatten 3, wabenförmig ausgebildet. Die Wabenform verbessert beispielsweise die Wärmeleitung, die Wärmeübertragung aber auch die Verteilung der Wärme auf die Überdruckbackform.

**Fig. 7** zeigt eine schematische Darstellung eines Tragrahmens 1. Alle Ausführungsformen können bevorzugt als Backplattensystem ausgebildet sein, bei dem unterschiedliche Backplatten 3 wahlweise mit dem Tragrahmen 1 verbunden werden können. In dieser Darstellung ist schematisch illustriert, dass eine Backplatte 3 durch eine größere Backplatte 3 ersetzt werden kann, beispielsweise um das Produktformat zu ändern. Gegebenenfalls kann eine Backplatte 3 jedoch auch durch eine baugleiche, neue Backplatte 3 ersetzt werden, wenn die vorab mit dem Tragrahmen 1 verbundene Backplatte 3 verschlissen ist.

## Patentansprüche

1. **Backplattenvorrichtung,** insbesondere Backzange, zur Herstellung unter Überdruck gebackener, knusprig spröder Waffeln aus einer im unausgebackenen Zustand 55-70% Wasser enthaltenden Backmasse, umfassend:
- zwei Tragrahmen (1), die jeweils einen Tragrahmeninnenraum (2) aufweisen,
- zwei Backplatten (3), die je an oder in einem der Tragrahmen (1) angebracht sind,
- und zwei beidseitig der Backplatten (3) angeordnete Verbindungsvorrichtungen (4),
- wobei die Verbindungsvorrichtungen (4) derart ausgestaltet sind, dass die Backplattenvorrichtung öffenbar, schließbar und in der geschlossenen Stellung zur Bildung einer Überdruckbackform verriegelbar ausgebildet ist,
**dadurch gekennzeichnet, dass** die Backplatten (3) jeweils derart in den Tragrahmeninnenraum (2) eingesetzt sind oder derart im Tragrahmeninnenraum (2) angeordnet sind, dass die der Überdruckbackform abgewandten Rückseiten (5) der Backplatten (3) außenliegende Heizflächen der Backplattenvorrichtung bilden.

2. Backplattenvorrichtung nach Anspruch 1, **dadurch gekennzeichnet,**
- **dass** sich die Backplatten (3) in den jeweiligen Tragrahmeninnenraum (2) erstrecken,
- und insbesondere dass sich die Backplatten (3) durch den jeweiligen Tragrahmeninnenraum (2) hindurch erstrecken.

3. Backplattenvorrichtung nach Anspruch 1 oder 2, **dadurch gekennzeichnet,**
- **dass** die beiden Verbindungsvorrichtungen (4) durch die beiden Tragrahmen (1) miteinander verbunden sind,
- und **dass** die Tragrahmen (1) als Biegeträger zur Aufnahme der beim Backen in der Überdruckbackform ausgehenden Druckkräfte wirken.

4. Backplattenvorrichtung nach einem der Ansprüche 1 bis 3, **dadurch gekennzeichnet, dass** die Tragrahmen (1) ausschließlich im Randbereich (6) der Backplatten (3) verlaufen und dadurch ein Fenster (7) bilden, durch das die Rückseiten (5) der Backplatten (3) unabgedeckt freigehalten sind.

5. Backplattenvorrichtung nach einem der Ansprüche 1 bis 4, **dadurch gekennzeichnet,**
- **dass** die Backplatten (3) an ihren Stirnseiten jeweils einen nach außen Richtung Rückseite zusammenlaufenden Abschnitt (8) aufweisen,
- insbesondere dass die Backplatten (3) einen pyramidenstumpfförmigen oder abgerundeten Abschnitt aufweisen.

6. Backplattenvorrichtung nach einem der Ansprüche 1 bis 5, **dadurch gekennzeichnet,**
- **dass** die Tragrahmen (1) und insbesondere die Tragrahmeninnenräume (2) der Form der mit ihnen verbundenen Backplatte (3) angepasst sind,
- insbesondere dass die Innenseiten der Tragrahmen (1) bzw. die Tragrahmeninnenräume (2) einen nach außen zusammenlaufenden Abschnitt (9) aufweisen.

7. Backplattenvorrichtung nach einem der Ansprüche 1 bis 6, **dadurch gekennzeichnet,**
- **dass** eine Justieranordnung (10) vorgesehen ist, die eine Einstellung der Lage und/oder des Verlaufs einer Backplatte (3) gegenüber jenem Tragrahmen (1) erlaubt, an dem die Backplatte (3) angebracht ist,
- und **dass** die Justieranordnung (10) mehrere im oder am Tragrahmen (1) angeordnete und/oder durch den Tragrahmen (1) hindurch verlaufende Stellmittel (11), wie insbesondere Stellschrauben, umfasst.

8. Backvorrichtung nach Anspruch 7, **dadurch gekennzeichnet,**
- **dass** die Backplatte (3) durch die Justieranordnung (10) mit dem Tragrahmen (1) verbunden ist,
- und/oder dass die Backplatte (3) ausschließlich durch die Justieranordnung (10) an dem Tragrahmen (1) angebracht ist.

9. Backplattenvorrichtung nach einem der Ansprüche 1 bis 8, **dadurch gekennzeichnet, dass** die Rückseiten (5) der Backplatten (3) jeweils eine Oberfläche zur gleichmäßigen Beheizung der Backplatte (3) und der Überdruckbackform, wie insbesondere ein Waben-, Pyramiden- oder Rippemuster, oder eine glatte Oberfläche aufweisen.

10. Backplattenvorrichtung nach einem der Ansprüche 1 bis 9, **dadurch gekennzeichnet, dass** eine Verbindungsvorrichtung (4) als Scharnier (12) ausgebildet ist und die andere Verbindungsvorrichtung (4) als Verriegelungsvorrichtung (13), sodass die Backplattenvorrichtung als Backzange ausgebildet ist.

11. Backplattenvorrichtung nach einem der Ansprüche 1 bis 10, **dadurch gekennzeichnet, dass** zur Bildung der Überdruckbackform Abschlussleisten (14) wie Dichtleisten und/oder Dampfleisten vorgesehen sind.

12. **Backplattensystem** umfassend eine Backplattenvorrichtung nach einem der Ansprüche 1 bis 12 und mindestens eine weitere Backplatte (3), die die mit einem der Tragrahmen (1) verbundene Backplatte (3) ersetzt, wobei die weitere Backplatte (3) insbesondere:
- eine defekte oder verschlissene Backplatte (3) gleichartig ersetzt,
- eine Backplatte (3) zur Herstellung einer anderen Waffelform ist,
- eine Backplatte (3) mit einer anders ausgestalteten Rückseite (5) ist,
- oder eine Backplatte (3) aus einem anderen Material ist.

13. **Backplatte** (3), eingerichtet zum Einsatz in einer Backplattenvorrichtung nach einem der Ansprüche 1 bis 11 und/oder in einem Backplattensystem nach Anspruch 12.

14. **Backvorrichtung** zur Herstellung unter Überdruck gebackener, knusprig spröder Waffeln aus einer im unausgebackenen Zustand 55-70% Wasser enthaltenden Backmasse, umfassend einen Endlosförderer (15) und mehrere entlang des Endlosförderers (15) vorgesehene Backplattenvorrichtungen, die aneinandergereiht jeweils nacheinander:
- einen Backmassenauftragsbereich (16) zum Auftrag einer Backmasse auf eine geöffnete Backplattenvorrichtung,
- einen Schließbereich (17) zum Schließen der Backplattenvorrichtungen,
- einen Backraum (18) zum Backen der Backprodukte in den geschlossenen Backplattenvorrichtungen, in dem mindestens eine Heizanordnung (19) zur Beheizung der im Backraum (18) befindlichen Backplattenvorrichtungen vorgesehen ist,
- einen Öffenbereich (20) zum Öffnen der Backplattenvorrichtungen
- und einen Waffelentnahmebereich (21) zur Entnahme der gebackenen Waffeln aus den geöffneten Backplattenvorrichtungen, durchlaufen,
**dadurch gekennzeichnet, dass**
- die Backplattenvorrichtungen nach einem der Ansprüche 1 bis 11 ausgebildet sind.

15. Backvorrichtung nach Anspruch 14, **dadurch gekennzeichnet, dass** die Heizanordnung (19) direkt auf die Rückseiten (5) der ihr zugewandten Backplatten (3) wirkt.
